# EUROPEAN PATENT APPLICATION

(11) **EP 4 707 061 A1**
(43) Date of publication of application: **11.03.2026**
(21) Application number: 25192059.1
(22) Date of filing: 28.07.2025
(51) Int. Cl.: B60L 58/21, B60L 15/00, B60L 50/51, B60L 58/20, H02J 7/00

(54) **TWO-PHASE ELECTRIC MACHINE WITH INTELLIGENT BATTERY SYSTEM**

(30) Priority: 26.08.2024 US 202418815296
(71) Applicant: Volvo Car Corporation, 405 31 Göteborg (SE)
(72) Inventor: Härsjö, Joachim, 40531 Göteborg (SE); Forssell, Jonas, 40531 Göteborg (SE); Singh, Aditya Pratap, 40531 Göteborg (SE); Pan, Xiao, 40531 Göteborg (SE); Tiwari, Chandradeep, 40531 Göteborg (SE)
(74) Representative: Maiwald GmbH

(57) **Abstract**

Various technologies and embodiments are presented to operate a two-phase machine. The two-phase machine is powered by a first phase circuit comprising a first string of battery cell devices electrically coupled to the machine via a first supply line and a first return line, and a second phase circuit comprising a second string of battery cell devices electrically coupled to the machine via a second supply line and a second return line. One or more processors can be configured to control operation of one or more switches in the first and second strings of battery cell devices, such that a first voltage provided by the first string of battery cell devices is 90° out of phase relative to a second voltage provided by the second string of battery cell devices. The two-phase machine can be a motor comprising a stator with a two-phase winding pattern.

## Description

### TECHNICAL FIELD

The subject disclosure relates to battery and power technologies, and more particularly to utilizing intelligent battery cell devices, comprising integrated monitoring and switching equipment, to operate a two-phase machine.

### BACKGROUND

While electric vehicles (EV) are becoming commonplace globally, the adoption of such vehicles is partially dependent upon the implementation of the onboard batteries. A wealth of technical knowledge exists regarding the development/use of onboard batteries direct current (DC) output to empower alternating current (AC) electric machines via inverter, while further research is being conducted regarding EV batteries and attaining alternating current (AC) directly from batteries, which can be fed to two-phase and three-phase system.

### SUMMARY

The following presents a summary to provide a basic understanding of one or more embodiments described herein. This summary is not intended to identify key or critical elements, or delineate any scope of the different embodiments and/or any scope of the claims. The sole purpose of the Summary is to present some concepts in a simplified form as a prelude to the more detailed description presented herein.

In one or more embodiments described herein, systems, devices, methods, processes, apparatus, and such like are presented to facilitate utilizing intelligent battery cell devices, comprising integrated monitoring and switching equipment, to operate a two-phase machine. Further, the two-phase machine and battery cell devices can be located on a vehicle, wherein, for example, the two-phase machine can be utilized to propel the vehicle.

According to one or more embodiments, a system can comprise a two-phase machine, and a first battery pack comprising a first string of battery cell devices, wherein a first cell pole of the first battery pack can be connected to a first terminal of a first winding included in the two-phase machine via a first supply line, and a second cell pole of the first battery pack can be connected to a second terminal of the first winding via a first return line, wherein the first battery pack can include at least one first processor and at least one first switch configured to generate a first electrical energy supply to the two-phase machine. The system can further comprise a second battery pack comprising a second string of battery cell devices, wherein a first cell pole of the second battery pack can be connected to a first terminal of a second winding of the two-phase machine via a second supply line, and a second cell pole of the second battery pack can be connected to a second terminal of the second winding via a second return line, wherein the second battery pack can include at least one second processor and at least one second switch configured to generate a second electrical energy supply to the two-phase machine, wherein concurrent application of the first electrical energy supply and the second electrical energy supply combine to cause operation of the two-phase machine.

In an embodiment, the respective battery cell devices in the first string of battery cell devices comprise intelligent battery cells having integrated monitoring and switching equipment, and the respective battery cell devices in the second string of battery cell devices comprise intelligent battery cells having integrated monitoring and switching equipment.

In a further embodiment, the system can further comprise a third processor communicatively coupled to the first battery pack and the second battery pack, wherein the third processor is configured to operate in conjunction with the at least one first processor and the at least one second processor to facilitate operation of the first battery pack to provide a first electrical output having a first phase and the second battery pack to provide a second electrical output having a second phase, wherein the first phase and the second phase are disparate.

In an embodiment, the first string of battery cell devices can be connected in series, in parallel, or a combination of series and parallel to form the first battery pack, and the second string of battery cell devices can be connected in series, in parallel, or a combination of series and parallel to form the second battery pack.

In a further embodiment, the first electrical energy supply is a first alternating current (AC) phase A supply and the second electrical energy supply is a second AC phase B supply.

In another embodiment, the at least one first processor can be configured to operate the at least one first switch and the second first processor can be configured to operate the at least one second switch such that the first AC phase A supply is 90° out of phase with the second AC phase B supply.

In a further embodiment, the two-phase machine is a two-phase motor, an alternating current (AC) charger, or other electrical device configured for operation with a two-phase AC electrical supply.

In another embodiment, the two-phase machine comprises: a rotor having a set of magnets positioned thereon, and a stator having a winding pattern formed with the first winding and the second winding. The winding pattern can comprise a repeated pattern comprising a two-phase double layer comprising: a first winding having an upper half winding, a first full winding, a second full winding, and a lower half winding; and a second winding having an upper half winding, a first full winding, a second full winding, and a lower half winding. In a further embodiment, the upper half winding of the first winding is adjacent to the lower half winding of the second winding and the lower half winding of the first winding is adjacent to the upper half winding of the second winding.

In other embodiments, elements described in connection with the disclosed systems can be embodied in different forms such as computer-implemented methods, computer program products, or other forms. For example, in an embodiment, a computer-implemented method can be performed by a device operatively coupled to at least one processor, the method comprising controlling, by the device, operation of a first battery pack to provide first AC output to a two-phase machine, wherein the first AC output is a phase A output. The method can further comprise controlling, by the device, operation of a second battery pack to provide second AC output to the two-phase machine, wherein the second AC output is a phase B output, and application of the phase A output and phase B output cause operation of the two-phase machine.

Further embodiments can include a computer program product comprising a computer readable storage medium having program instructions embodied therewith to enable operation of a two-phase machine. The program instructions are executable by a processor to cause the processor to control operation of a first battery pack to provide first AC output to a two-phase motor, wherein the first AC output is a phase A output, and further control operation of a second battery pack to provide second AC output to the two-phase motor, wherein the second AC output is a phase B output. In an embodiment, the phase A output is 90° out of phase with the phase B output, and application of the phase A output and phase B output cause operation of the two-phase motor.

### DESCRIPTION OF THE DRAWINGS

One or more exemplary embodiments are described below in the Detailed Description section with reference to the following drawings.
**FIG. 1** presents a schematic of a system configured to operate as a two-phase propulsion system, in accordance with an embodiment.
**FIG. 2** presents a plot of voltage curves generated by respective strings of battery packs, in accordance with an embodiment.
**FIGS. 3A-C** presents plots of voltage curves generated by respective strings of battery packs in respective phase and phase offsets, in accordance with an embodiment.
**FIGS. 4A-C** illustrate respective winding designs/patterns for an electric machine, in accordance with one or more embodiments.
**FIG. 5** presents a plot of torque versus rotor angle for a three-phase electric machine and a two-phase electric machine, in accordance with an embodiment.
**FIG. 6** is a flowchart presenting an example computer-implemented method for operation of a two-phase machine.
**FIG. 7** is a flowchart presenting an example method for fabrication and operation of a two-phase machine, in accordance with one or more embodiments presented herein.
**FIG. 8** is a flowchart presenting an example computer-implemented method for operation of a two-phase machine, in accordance with one or more embodiments presented herein.
**FIG. 9** is a flowchart presenting an example computer-implemented method for operation of a two-phase machine, in accordance with one or more embodiments presented herein.
**FIG. 10** is a block diagram illustrating an example computing environment in which the various embodiments described herein can be implemented.
**FIG. 11** is a block diagram illustrating an example computing environment with which the disclosed subject matter can interact, in accordance with an embodiment.

### DETAILED DESCRIPTION

The following detailed description is merely illustrative and is not intended to limit embodiments and/or application or uses of embodiments. Furthermore, there is no intention to be bound by any expressed and/or implied information presented in any of the preceding Background section, Summary section, the Abstract, and/or in the Detailed Description section.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

### OVERVIEW

While battery cells have conventionally been utilized in DC applications, battery cells, battery cell devices, battery packs, battery modules, smartcells, and suchlike, are finding application in AC environments, such as providing AC power to an AC machine/motor located on a vehicle. Traction power systems commonly comprise a three-phase electric machine operating in conjunction with three-phase inverters, whereby such traction power systems are commonly utilized to propel an electric vehicle. Such traction power systems find application as a function of the high efficiency and comparatively easy control of operation, but conventional traction power systems can be costly and space consuming. For example, equipment, for generation of each AC phase, has to be manufactured and located onboard a vehicle.

Per the various embodiments presented herein, a traction power system is presented comprising a two-phase system. Rather than a three-phase system being utilized, equipment typically utilized for a three-phase system is pared down for the two-phase system.

The various embodiments presented herein relate to utilizing one or more intelligent battery cells having integrated monitoring and switching equipment, as detailed in United States Patent No. 11,909,007 B2 (dated February 20, 2024), which is incorporated in its entirety by reference herein. The intelligent battery cells having integrated monitoring and switching equipment are also referred to herein as a battery cell device/smartcell. A string, or series, of interconnected battery cell devices can be combined/electrically coupled to form a battery pack.

For background, a battery cell device/smartcell is a device comprising a battery cell, wherein the battery cell further comprises active battery cell material and an internal circuit coupled to the active battery cell material. The internal circuit further comprises one or more switches coupled to battery cell poles of the device, wherein the battery cell poles can comprise a first set of cell poles coupled to a direct current (DC) supply section of the battery cell and can also comprise a second set of cell poles coupled to an alternating current (AC) supply section of the battery cell. The battery cell device can further comprise a processor that operates the one or more switches to simultaneously provide a first defined value of DC electric energy supply at the first set of cell poles (DC) and a second defined value of AC electric energy supply at the second set of cell poles (AC). The one or more switches can be semiconductor switches such as a metal-oxide semiconductor field-effect transistor (MOSFET) switch configured to enable different operating modes of a respective battery cell device (e.g., off, positive, negative, bypass, etc.).

Operation, and monitoring, of the battery cell device can be performed by a processor (and associated memory comprising computer readable storage medium having program instructions embodied therewith) included in, or communicatively coupled to, a battery cell device. The processor can be configured to control operation of one or more switches of the internal circuit integrated in the battery cell device using electrical energy stored in at least one battery cell included in the battery cell device. Operation can further comprise simultaneously providing, by the processor within the battery cell device, a first defined value of DC electric energy supply at a first set of cell poles of the battery cell device and a second series of defined values of AC electric energy supply at a second set of cell poles of the battery cell device. Over the course of time, the value of DC electric energy and/or the value of the AC electric energy supplied by the battery cell device can change, e.g., to form an AC electric energy supply having a required sine wave configuration.

A battery pack can be formed, whereby a series of battery cell devices can be electrically coupled to form a string of battery cell devices, e.g., by electrically coupling respective AC cell poles. For example, a first AC cell pole of a first battery cell device can be coupled to a first AC cell pole of a second battery cell device and a second AC cell pole of the second battery cell device can be coupled to a first AC cell pole of an *n*^{th} battery cell device, etc., across *n* battery cell devices, as required to electrically couple a required number of battery cell devices to create the string of battery cell devices to generate a required energy output (e.g., negative output, positive output, etc.) for a respective phase A AC circuit and a phase B AC circuit. Operation of the respective strings of battery cell devices can further comprise providing, by one or more processors within the respective battery cell devices, at least one of a positive electric potential, a negative electric potential, or an electric potential of zero volts at the set of AC cell poles.

By utilizing respective strings of battery cell devices, a direct AC output can be attained directly from the string of battery cell devices (and cells incorporated therein), using the aforementioned semiconductor switches. As further described, such operation enables two-phase AC supply from the respective string of battery cell devices to have a higher efficiency when compared with other conventional technologies, such as a three-phase system. Per the various embodiments presented herein, by utilizing efficient two-phase supply from two distinct battery packs, a two-phase electrical machine is presented herein, wherein the two-phase electrical machine is configured to provide comparable or higher operating performance and efficiency than any conventional three-phase electric machine available in the marketplace.

As further described, owing to the physical reduction in three-phase equipment to two-phase equipment, a cost saving can be realized owing to removal of a requirement to provide a DC to AC converter and electric machine, while attaining comparable or improved performance to a conventional three-phase system. Further, reduction in physical equipment enables the two-phase system to be more compact than a three-phase system having comparable output, enabling space saving (e.g., for customer utility) in combination with the overall weight of the two-phase propulsion system being less than the weight of a three-phase propulsion system. Further, the various embodiments presented herein enables improved electro-magnetic compatibility at the system level than an existing three-phase system.

Further, a conventional two-phase inverter/converter (e.g., DC to AC) and electric machine suffer from inefficiency with regard to performance and efficiency compared with a three-phase having similar output/propulsion specification. Further, existing solutions utilize high current rated semiconductors and higher cooling power which leads to extra cost. Further, conventional systems either have higher currents or fluctuating power, require extra cooling, and have high electro-magnetic interference.

Per the various embodiments presented herein regarding a two-phase system, a neutral/return wire is connected from the electric machine to back to the respective battery pack comprising the string of battery cell devices to facilitate constant power. By utilizing an additional neutral wire on each of the return lines, power fluctuation can be prevented.

The various embodiments presented herein utilize battery cell device technology having efficient two-phase supply which is not possible with same efficiency with current converters. Direct AC output can be provided from cells incorporated in the battery cell device technology, where, instead of requiring high current-rated semiconductors utilized in a conventional system, the various embodiments presented herein can utilize low current-rated semiconductors, and low voltage-rated semiconductors, in parallel to each other, which enables a reduction in cost and further reduces a requirement for extra cooling of the devices. Also, rather than utilizing a single neutral wire per a conventional system, the various embodiments presented herein can utilize two extra neutral wires (e.g., a neutral wire respectively on the phase A and phase B circuits) which can eliminate the flow of extra 50% return current and provide better electro-magnetic compatibility. The battery cell device technology is scalable, such that, if there is a requirement to compensate with more battery pack voltage for an equivalent system power of three-phase then additional battery cell devices (and included cells) can be added in series to increase battery pack voltage of a string of battery cell devices.

In another embodiment, a configuration is presented herein wherein the windings of a two-phase electric machine have been redesigned for a two-phase system having similar performance or efficiency to three-phase system. In another embodiment, the two-phase electric machine has 90° phase-shift, with double-layer winding being utilized on a stator of the two-phase electric machine. In a further embodiment, the initial rotor position has been aligned in the following order where the rotor direct axis (d-axis) always passes from between the last phase-A winding slot and first occurring phase-B slot to attain maximum peak torque and less torque fluctuations.

### SYSTEM CONFIGURATIONS AND OUTPUT CURVES

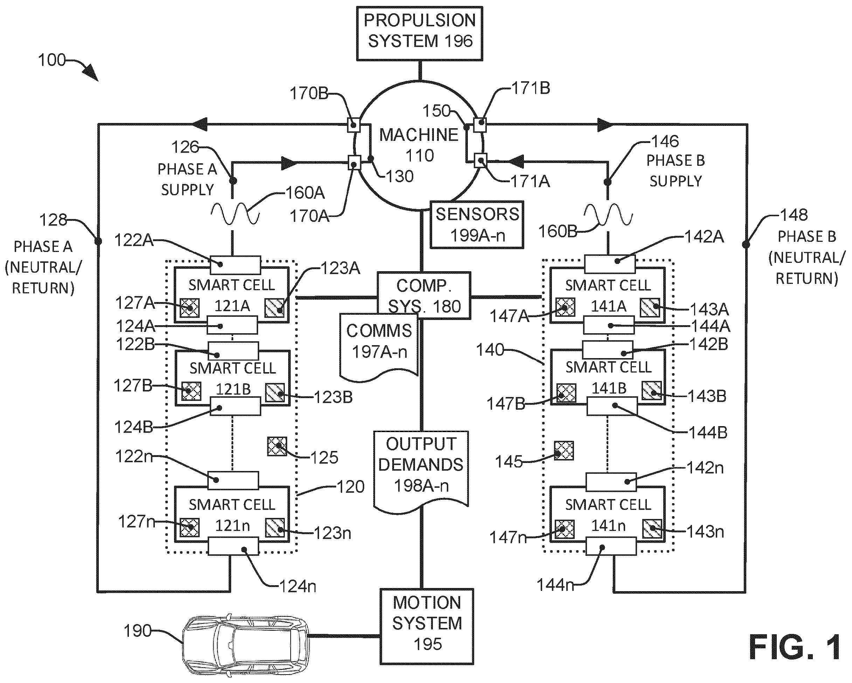

**FIG. 1** presents a schematic of a system 100 configured to operate as a two-phase system, in accordance with an embodiment. Ranges A-*n* are utilized herein to indicate a respective plurality of devices, components, statements, attributes, etc., where *n* is any positive integer.

System 100 illustrates an electrical circuit comprising a two-phase machine 110 electrically coupled to a first battery pack 120 comprising first a string of battery cell devices 121A-*n* and a second battery pack 140 comprising a second string of battery cell devices 141A-*n*. Machine 110 can be an electrical motor, an AC-charger, or other electrical device configured for operation with a two-phase electrical supply. The respective battery cell devices in the first string of battery cell devices 121A-*n* comprising first battery pack 120 are connected in series, and similarly, the respective battery cell devices in the second string of battery cell devices 141A-*n* comprising second battery pack 140 are also connected in series.

Further, the first string of battery cell devices 121A-*n* are included in a first phase circuit/phase A circuit. The first string of battery cell devices 121A-*n* connected, via first cell pole 122 (a.k.a. a connector, a terminal, a busbar), to a first terminal/end of a phase A/first winding 130 located in machine 110. Connection between first cell pole 122 and the first winding 130 is via a first supply line 126. A second terminal/end of the first winding 130 is further connected to a second cell pole 124 of the first string of battery cell devices 121A-n via a first return line 128 (a.k.a. a neutral line). The circuit comprising the first battery pack 120 (comprising string of battery cell devices 121A-*n*), the first supply line 126, the first return line 128, and the first winding 130 form a first, phase A circuit attached to machine 110 producing a first electrical output 160A with phase A.

The second string of battery cell devices 141A-*n* are included in a second phase circuit/phase B circuit. The second set of battery cell devices 141A-*n* connected, via third cell pole 142, to a first terminal of a phase B/second winding 150 located in machine 110. Connection between third cell pole 142 and the second winding 150 is via a second supply line 146. A second terminal of the second winding 150 is further connected to a fourth cell pole 144 of the second string of battery cell devices 141A-*n* via a second return line 148 (a.k.a. a neutral line). The circuit comprising the second battery pack 140 (comprising second string of battery cell devices 141A-*n*), the second supply line 146, the second return line 148, and the second winding 150 form a second, phase B circuit attached to machine 110 producing a second electrical output 160B having phase B.

It is to be appreciated that while FIG. 1 illustrates the first battery pack 120 and the second battery pack 140 as respectively comprising the first string of battery cell devices 121A-*n* electrically coupled with a series configuration and the second string of battery cell devices 141A-*n* also electrically coupled with a series configuration, the first string of battery cell devices 121A-*n* can be connected in series, in parallel, or a combination of series and parallel to form the first battery pack 120, and the second string of battery cell devices 141A-*n* can be connected in series, in parallel, or a combination of series and parallel to form the second battery pack 140.

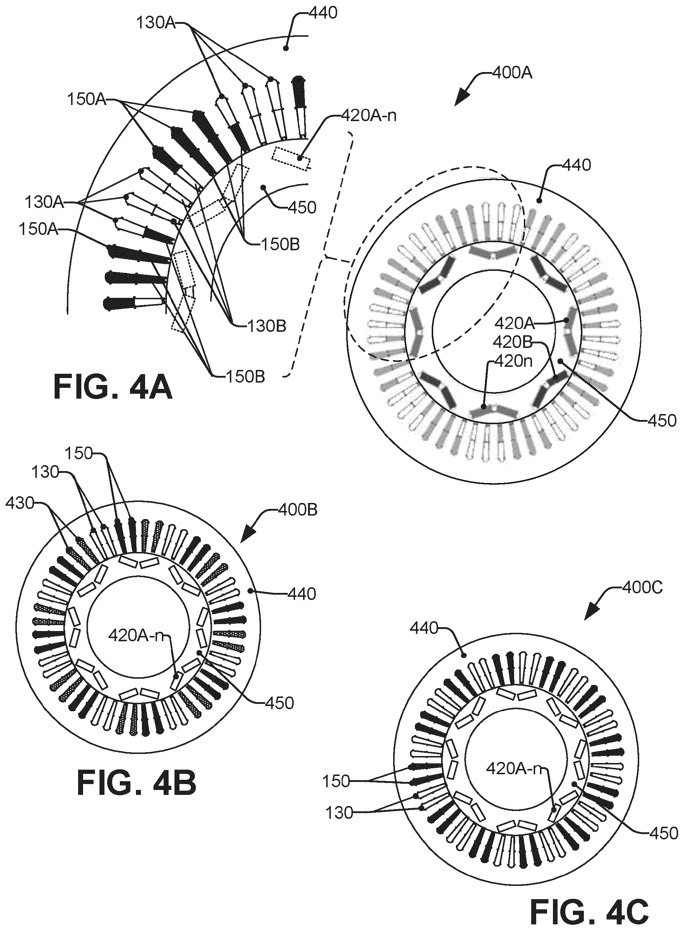

Return lines 128 and 148 can respectively comprise of a pair of neutral/return lines to facilitate a 90° phase shift between phase A and phase B, as further described. Example winding patterns for the first winding 130 and the second winding 150 are shown in FIGS. 4A-C.

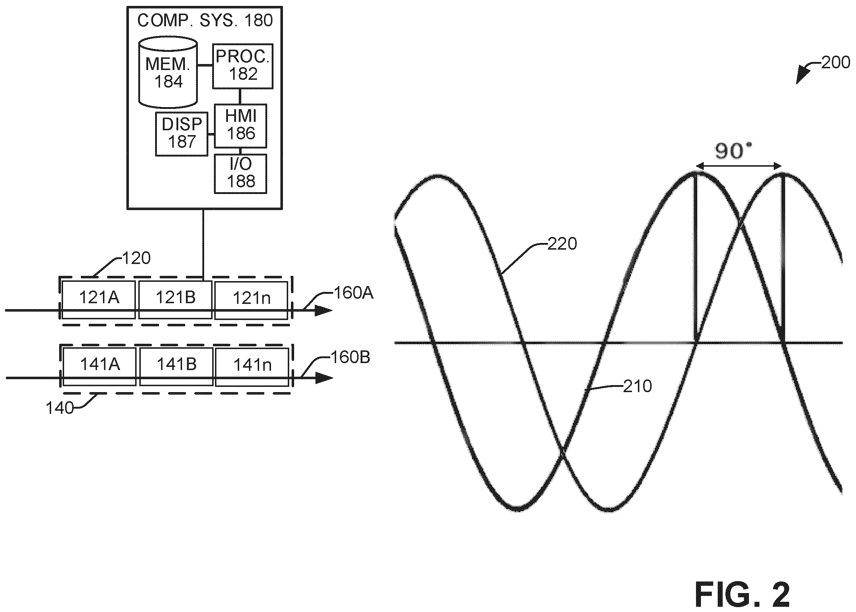

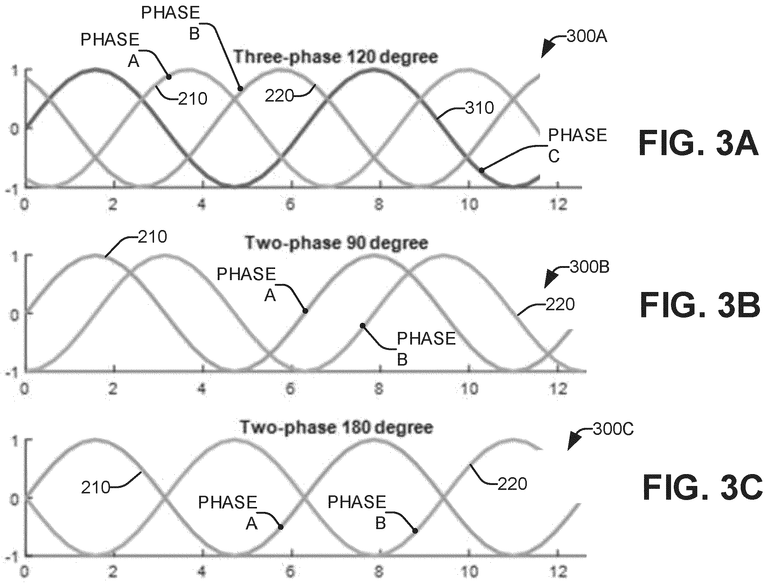

As previously mentioned, the respective battery cell devices 121A-*n* and 141A-*n* are intelligent battery cells having integrated monitoring and switching equipment, wherein a respective processor 127A-*n*/147A-*n* located in each of the respective battery cell devices 121A*n* and 141A-*n* can function to control a respective switch 123A-*n*/143A-*n* in each of the respective battery cell devices 121A-*n* and 141A-*n* to facilitate output of an electrical output comprising an alternating current 160A/160B, as further shown in FIGS. 2 and 3B. Hence, with at least one first processor 127A-*n* controlling operation of the first string of battery cell devices 121A-*n*, a first phase, phase A electrical energy output 160A can be provided to the first winding 130. Further, with at least one second processor 147A-*n* controlling operation of the second string of battery cell devices 121A-*n*, a second phase, phase B electrical energy output 160B can be provided to the second winding 150. As further described, the at least one first processor 127A-*n* and the at least one second processor 147A-*n* can be configured to respectively control operation of the first string of battery cell devices 121A-*n* and the second string of battery cell devices 141A-*n* such that the first electrical energy output 160A is out of phase with the second electrical energy output 160B. In an example embodiment, the difference in phase between the first electrical energy output 160A and the second electrical energy output 160B is 90°, however, any suitable/applicable phase difference can be utilized. In another embodiment, a processor 125 can be located at the first battery pack 120 and configured to perform combined operation performed by processors 127A-*n* and a processor 145 can be located at the second battery pack 140 and configured to perform combined operation performed by processors 127A-*n*, e.g., regarding respective operation of switches 123A-*n*/143A-*n* in the respective battery packs 120 and 140, as further described.

As further shown, system 100 can include a computer system 180, wherein computer system 180 can include a processor 182 coupled to a memory 184. It is to be appreciated that while the respective battery packs 120 and 140, and battery cell devices 121A-n and 141A-*n*, have been described with included processors 125, 127A-*n*, 145, 147A-*n*, controlling operation of any of a single battery cell device 121A-*n*/141A-*n*, or operation of a battery pack 120 or 140, a computer system 180 can be utilized to monitor and control operation of any of the respective battery packs 120 and 140, battery cell devices 121A-*n* and 141A-*n*, and machine 110. Operation of any of the respective battery packs 120 and 140, battery cell devices 121A-*n* and 141A-*n*, and machine 110 can be based on measurements/signals (e.g., in communications 197A-*n*, as further described) generated/transmitted via respective sensors 199A-*n* located at any of machine 110, respective battery packs 120 and 140, battery cell devices 121A-*n* and 141A-*n*, etc., wherein the sensors 199A-*n* can be configured to measure any suitable parameter of interest, such as battery cell temperature, battery cell pressure, current, voltage, rotational speed of machine 110, etc. In accordance with the respective measurements (e.g., conveyed in communications 197A-n), processor 182 can be configured to control operation of the first battery pack 120 and the second battery pack 140 to control operation of respective switches 123A-*n*/143A-*n* in the respective battery packs 120 and 140 to enable production of A phase and B phase electrical outputs 160A and 160B having a desired degree of phase shift/difference to enable operation of the machine 110. For example, per the example embodiments presented herein, processor 182 controls operation of switches 123A-*n*/143A-n to enable phase A output 160A to be 90° out of phase with phase B output 160B.

In an example implementation, system 100 can be utilized onboard an electric vehicle 190, wherein the processors 125, 127A-*n*, 145, 147A-*n*, and/or 182 can operate in conjunction with a motion system 195 located on vehicle 190. Hence, in the event of machine 110 is a two-phase motor coupled to a propulsion system 196 utilized to propel vehicle 190, the processors 125, 127A-*n*, 145, 147A-*n*, and/or 182, can function in accordance with one or more output demands 198A-*n*, and control operation (e.g., rotation of rotor 450 in machine 110) to satisfy the respective output demands 198A-*n*, wherein the output demands 198A-*n* can be power demands relating to acceleration, maintain speed, deceleration, etc., or vehicle 190.

Operational control of switches 123A-*n*/143A-*n* in battery cell devices 121A-*n* and 141A-*n* can be in the form of a hierarchy, whereby, in a first embodiment, the central processor 182 can control operation of the switches 123A-*n*/143A-*n* in accordance with the output demands 198A-*n*. In a second embodiment, the local processors 125 and 145 can function to control operation of the switches 123A-*n*/143A-*n* in accordance with the output demands 198A-*n*. In a third embodiment, the onboard processors 127A-*n* and 147A-*n* can be configured to control operation of switches 123A-*n*/143A-*n* in accordance with the output demands 198A-*n*. Accordingly, the various configurations presented herein are flexible with regard to which processor(s) is controlling operation of the switches 123A-*n*/143A-*n*, and where the respective processor(s) is/are located/operational.

Various communications 197A-*n* can be utilized across system 100, between machine 110, battery packs 120 and 140, computer 180, vehicle 190, etc., and respective included components. For example, communications 197A-*n* can be transmitted between motion system 195, machine 110, and any of processors 125, 127A-*n*, 145, 147A-*n*, and/or 182. Communications 197A-*n* can include notifications, instructions (e.g., output demands 198A-*n*, instructions between a respective processor 125, 127A-*n*, 145, 147A-*n*, and/or 182 and a respective control switches 123A-n/143A-*n* to enable operation of the switches 123A-*n*/143A-*n*), data (e.g., sensor data from sensors 199A-*n*, and such), information, status updates, selections, and the like.

Computer 180 can be incorporated into an onboard computer system (OCS) such as a vehicle control unit (VCU) configured to operate/control one or more systems (e.g., machine 110, motion system 195, propulsion system 196, and the like), a battery management system configured to monitor/control operation of the battery packs 120 and 140, and the like.

**FIG.** 2 presents a plot 200 of voltage curves generated by respective battery packs, in accordance with an embodiment. Voltage curve 210 (phase A) corresponds to the respective voltages 160A generated by the first string of battery cell devices 121A-*n* in first battery pack 120 and voltage curve 220 (phase B) corresponds to the respective voltages 160B generated by the second string of battery cell devices 141A-*n* in second battery pack 140.

As shown, phases A and B are shifted out of phase by 90°, such that the first string of battery cell devices 121A-*n* and the second string of battery cell devices 141A*-n* provide constant power to the machine 110 via the first winding 130 and the second winding 150. While a string of battery cell devices can be configured to be a three-phase A-B-C system, e.g., comprising three strings, a first string of battery cell devices 121A-*n*, a second string of battery cell devices 141A-*n*, and a third string of battery cell devices (not shown), the third string (third phase/phase C) can be eliminated to provision a two-phase A-B system. In reducing the system from a three-phase system to a two-phase system, the respective battery cells, semiconductor switches, and other system hardware in the third string of battery cell devices can be eliminated/removed, wherein, the reduction in system hardware can reduce the cost of implementation/operation of the various embodiments presented herein, e.g., by approximately one third, ~33%. In an aspect, to maintain the same battery capacity as that provided by a three-phase A-B-C system, the two-phase A-B system can utilize further battery cell devices 121A-*n*/141A*-n* (e.g., added in parallel or series) and/or use higher capacity battery cells depending upon the performance requirement(s) of the two-phase A-B system, however, even in such a scenario, the placement and cost of semiconductors utilized in the A-B-C system can be removed from the A-B system.

As further shown, the computer system 180 can include a memory 184 that stores the respective computer executable components (e.g., to control switches 123A-*n*/143A-n) and further, a processor 182 configured to execute the computer executable components stored in the memory 184. Memory 184 can be further configured to store/include communications 197A-*n* (e.g., sensor signals, output instructions, and the like), and suchlike. While not shown, processors 125, 127A-*n*, 145, and/or 147A-*n* can function comparable to processor 182 and utilize memory comparable to memory 184. It is to be appreciated that any of processors 125, 127A-*n*, 145, 147A-*n*, and/or 182 are communicatively coupled to a memory comparable to memory 184, whether the memory is located at computer system 180 or locally at a battery pack 120/140 or at respective battery cell devices 121A-*n*/141A-*n*.

The computer system 180 can further include a human machine interface (HMI) 186 (e.g., a display, a graphical-user interface (GUI), infotainment system) which can be configured to present various information/communications 197A-*n* regarding any of signals from sensors 199A-*n*, output demands 198A-n, and the like. HMI 186 can include an interactive display 187 to present the various information via various screens presented thereon, and further configured to facilitate input of information/settings/selections, etc., regarding operation of machine 110, vehicle 190, and the like.

As further shown, the computer system 180 can include an input/output (I/O) component 188, wherein the I/O component 188 can be a transceiver configured/communicatively coupled to enable transmission/receipt of signals from sensors 199A-*n*, output demands 198A-*n*, communications 197A-*n*, etc. Any suitable technology can be utilized by I/O component 188 to enable the various embodiments presented herein, regarding transmission and receiving of communications 197A-*n*, etc. Suitable technologies include BLUETOOTH^{®}, cellular technology (e.g., 3G, 4G, 5G), internet technology, ethernet technology, ultra-wideband (UWB), DECAWAVE^{®}, IEEE 802.15.4a standard-based technology, Wi-Fi technology, Radio Frequency Identification (RFID), Near Field Communication (NFC) radio technology, and the like.

**FIGS. 3A-C** presents plots 300A-C of voltage curves generated by respective strings of battery packs in respective phase and phase offsets, in accordance with an embodiment. Plot 300A illustrates voltage curves 210 (phase A), 220 (phase B), and 310 (phase C), present in a three-phase A-B-C system. As shown, the respective curves are out of phase by 120° to each other.

Plot 300B illustrates voltage curves 210 and 220 present in a two-phase A-B system. As shown, the respective curves 210 and 220 are out of phase by 90° to each other. With plot 300B representing a two-phase system rather an a three-phase system, curve 310 (and corresponding componentry/circuitry) is eliminated. Plot 300B is comparable to plot 200.

Plot 300C illustrates voltage curves 210 and 220 present in a two-phase A-B system, however, unlike plot 300B, in plot 300C, the respective curves 210 and 220 are out of phase by 180° to each other.

With plot 300B representing a two-phase system rather than a three-phase system, curve 310C (and corresponding componentry/circuitry) is eliminated. Comparing plot 300A with 300B, the difference in number of phases, A-B-C vs. A-B, is apparent, further, the two-phase system utilizes a 90° phase shift rather than the 120° phase shift of the three-phase system. Comparing plot 300B with 300C, system 100 presented herein utilizes a 90° phase shift and the pairing of neutral wires comprising return supply lines 128 and 148. While a two-phase system utilizing a 180° phase shift can eliminate the need for extra neutral wires, such a two-phase system configuration is unable to provide constant power, where constant power is a critical requirement of a propulsion system 196, e.g., propelling an electric vehicle.

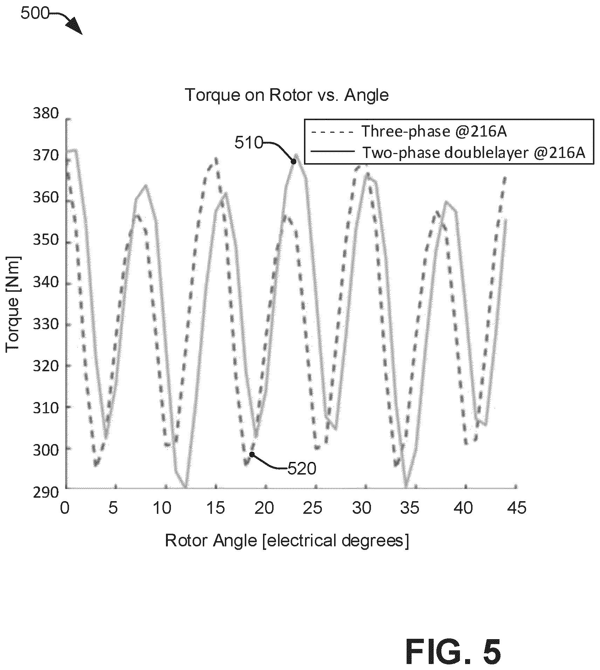

**FIGS. 4A-C** illustrate respective winding designs/patterns 400A, 400B, and 400C, for an electric machine, in accordance with one or more embodiments. FIG. 4A illustrates a winding pattern for implementation with a two-phase machine, wherein the winding pattern presented in FIG. 4A achieves a similar torque to the torque achieved with a three-phase machine having a conventional three-phase winding pattern, per FIG. 4B. The similarity in torques is further presented in FIG. 5. FIG. 4C illustrates an alternative two-phase winding pattern.

As shown in FIG. 4A, configuration 400A represents portions of a machine 110 comprising a stator 440 and a rotor 450 having an arrangement of magnets 420A-*n*, e.g., wherein machine 110 is an electric motor. A two-phase double layer winding can be utilized on a stator 440, wherein, in the example configuration presented in FIG. 4A, a winding pattern can comprise a repeated winding sequence of an upper half winding, two full windings, and a lower half winding. As shown, a first winding 130 can be fabricated to comprise a repeated pattern of a single upper half winding 130A, a first full winding comprising an upper half winding 130A and a lower half winding 130B, a second full winding comprising an upper half winding 130A and lower half winding 130B, and a single lower half winding 130B. As further shown, a second winding 150 can be fabricated to comprise a repeated pattern of a single upper half winding 150A, a first full winding comprising an upper half winding 150A and lower half winding 150B, a second full winding comprising an upper half winding 150A and lower half winding 150B, and a single lower half winding 150B.

For comparison, FIG. 4B illustrates a configuration 400B representing a winding pattern for a conventional three-phase machine, wherein the three-phase machine can be an electric motor. Configuration 400B comprises a stator 440 and a rotor 450 having an arrangement of magnets 460A-*n*. A three-phase winding pattern can be utilized on a stator 440, wherein, in the example configuration presented in FIG. 4B, a winding pattern can comprise a repeated winding sequence of a pair of first phase windings 130, followed by a pair of second phase windings 150, and a pair of third phase windings 430. The third phase windings 430 are redundant/not present on the two-phase configuration presented in FIG. 4A.

It is to be appreciated that any suitable winding pattern can be implemented, such as shown in FIG. 4C, wherein the winding pattern 400C is a two-phase winding pattern based on the three-phase winding pattern presented in FIG. 4B. Winding pattern 400C comprises a repeated winding sequence of a pair of first phase windings 130 followed by a pair of second phase windings 150.

**FIG. 5** presents a plot 500 of torque versus rotor angle for a three-phase electric machine and a two-phase electric machine, in accordance with an embodiment. Plot 510 is the torque (Nm) versus rotor angle (electrical degrees) of the two-phase system utilizing double layer winding and plot 520 is the torque versus rotor angle for a conventional three-phase machine. Both plots 510 and 520 present results of testing with a testing current of 216 amperes. As shown, comparison of plot 510 and plot 520 illustrates a two-phase system (e.g., per system 100) utilizing a two-phase double-layer winding configuration at the stator 440 of the machine 110 has similar performance to a three-phase system.

### COMPUTER-IMPLEMENTED METHODS

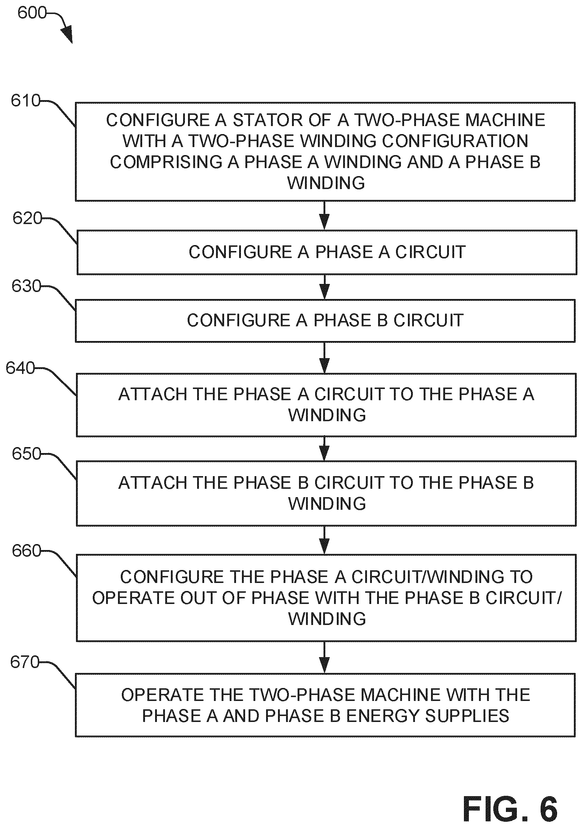

**FIG. 6****,** via flowchart 600, presents an example computer-implemented method for operation of a two-phase machine.

At 610, a two-phase winding configuration can be applied to a stator (e.g., stator 440) included in a two-phase machine (e.g., machine 110). As previously mentioned (e.g., per FIG. 4A), the two-phase winding configuration can comprise a first, phase A winding (e.g., phase A winding 130) and a second, phase B winding (e.g., phase B winding 150). The phase A winding and the phase B winding can be of any suitable configuration, per FIGS. 4A and 4C.

At 620, a first portion of a circuit (e.g., system 100) can be fabricated, wherein the first portion is a phase A circuit comprising a first battery pack (e.g., battery pack 120 comprising battery cells/battery cell devices 121A-*n* and respective switches 123A-*n*/143A-*n* and processors 125 and/or 127A-*n*), a supply line (e.g., supply line 126), and a return line (e.g., return line 128).

At 630, a second portion of the circuit can be fabricated, wherein the second portion is a phase B circuit comprising a second battery pack (e.g., battery pack 140 comprising battery cells 141A-*n* and respective switches 143A-*n* and processors 145 and/or 147A-*n*), a supply line (e.g., supply line 146), and a return line (e.g., return line 148).

At 640, the phase A circuit can be attached to the phase A winding (e.g., via terminals 170A and 170B).

At 650, the phase B circuit can be attached to the phase B winding (e.g., via terminals 171A and 171B).

At 660, operation of the phase A circuit can be configured to be out of phase with the phase B circuit, whereby the difference in phase can be of any suitable amount to enable operation of the two-phase machine. In an embodiment, phase A circuit can be configured to operate 90° out of phase to the phase B circuit. As previously mentioned, one or more of the respective processors (125, 127A-*n*, 145, and 147A-*n*) included in the first battery pack or the second battery pack can be configured to control operation of switches (e.g., switches 123A-*n*/143A-*n*) included in the first battery pack or the second battery pack to enable energy output of the first battery pack to be out of phase with energy output of the second battery pack. In another embodiment, as also mentioned, a central processor (e.g., processor 182) can be configured to control operation of the first battery pack (and included switches) and the second battery pack (and included switches) to maintain the required phase difference between the first battery pack output and the second battery pack output. In an embodiment, any of the processors (e.g., any of processors 125, 127A-*n*, 145, 147A-*n*, 182) can be configured to further monitor operation of the respective first battery pack, the second battery pack, and the two-phase machine (e.g., via sensors 199A-*n* and suchlike), and adjust operation/output of the first battery pack, second battery pack, and/or the two-phase machine.

At 670, operation of the two-phase machine can occur based on the phase A output and the phase B output. Operation of the two-phase machine can be adjusted based on the operational demand (e.g., output demand 198A-*n*) placed on the two-phase machine, wherein the one or more processors can adjust the switches in the first battery pack and the second battery pack in accordance with the operational demand, as well as sensor data (e.g., by sensors 199A*n*)*,* etc.

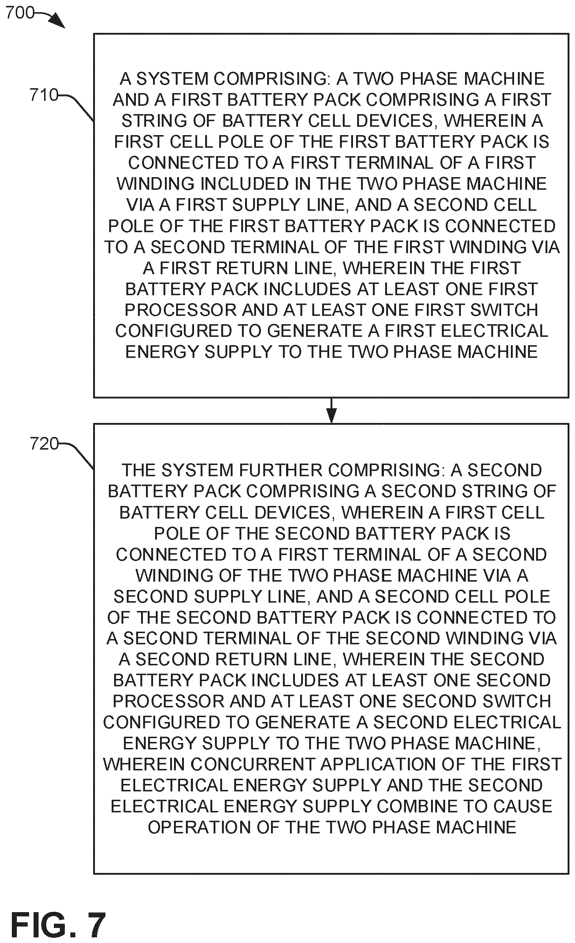

**FIG. 7****,** via flowchart 700, presents an example method for fabrication and operation of a two-phase machine, in accordance with one or more embodiments presented herein. At 710, method 700 can comprise fabrication of a system (e.g., system 100), wherein the system comprises a two-phase machine (e.g., two-phase machine 110) and a first battery pack (e.g., first battery pack 120) comprising a first string of battery cell devices (e.g., battery cell devices 121A-*n*), wherein a first cell pole (e.g., first cell pole 122A) of the first battery pack is connected to a first terminal (e.g., first terminal 170A) of a first winding (e.g., first winding 130) included in the two-phase machine via a first supply line (e.g., first supply line 126), and a second cell pole (e.g., second cell pole 124*n*) of the first battery pack is connected to a second terminal (e.g., second terminal 170B) of the first winding via a first return line (e.g., first return line 128), wherein the first battery pack includes at least one first processor (e.g., any of processors 125 and/or 127A-*n*) and at least one first switch (e.g., any of switches 123A-n) configured to generate a first electrical energy supply (e.g., energy output 160A) to the two-phase machine. At 720, the system can further comprise a second battery pack (e.g., second battery pack 140) comprising a second string of battery cell devices (e.g., battery cell devices 141A-*n*), wherein a first cell pole (e.g., first cell pole 142A) of the second battery pack is connected to a first terminal (e.g., first terminal 171A) of a second winding (e.g., second winding 150) of the two-phase machine via a second supply line (e.g., second supply line 146), and a second cell pole (e.g., second cell pole 144*n*) of the second battery pack is connected to a second terminal (e.g., second terminal 171B) of the second winding via a second return line (e.g., second return line 148), wherein the second battery pack includes at least one second processor (e.g., any of processors 145 and/or 147A-*n*) and at least one second switch (e.g., any of switches 143A-*n*) configured to generate a second electrical energy supply (e.g., energy output 160B) to the two-phase machine, wherein concurrent application of the first electrical energy supply and the second electrical energy supply combine to cause operation of the two-phase machine.

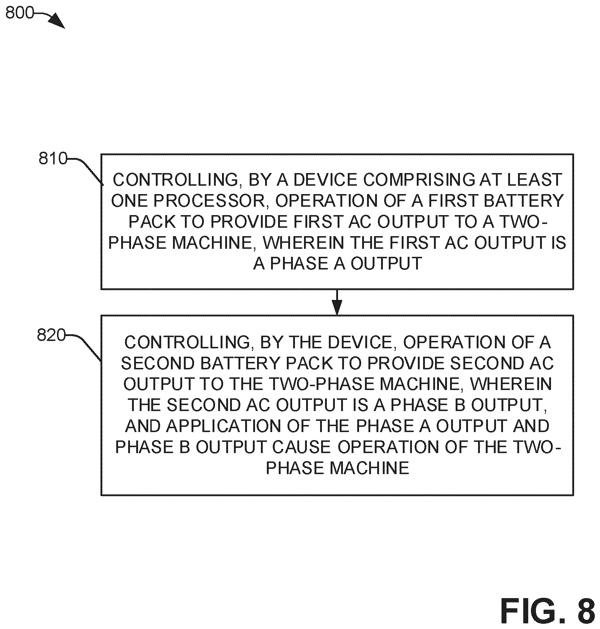

**FIG. 8****,** via flowchart 800, presents an example computer-implemented method for operation of a two-phase machine, in accordance with one or more embodiments presented herein. At 810, method 800 can comprise controlling, by a device comprising at least one processor (e.g., any of processors 125, 127A-*n*, 145, 147A-*n*, 182), operation of a first battery pack (e.g., first battery pack 120) to provide first AC output (e.g., first output 160A) to a two-phase machine (e.g., machine 110), wherein the first AC output is a phase A output. At 820, method 800 can further comprise controlling, by the device, operation of a second battery pack (e.g., second battery pack 140) to provide second AC output (e.g., second output 160B) to the two-phase machine, wherein the second AC output is a phase B output, and application of the phase A output and phase B output cause operation of the two-phase machine.

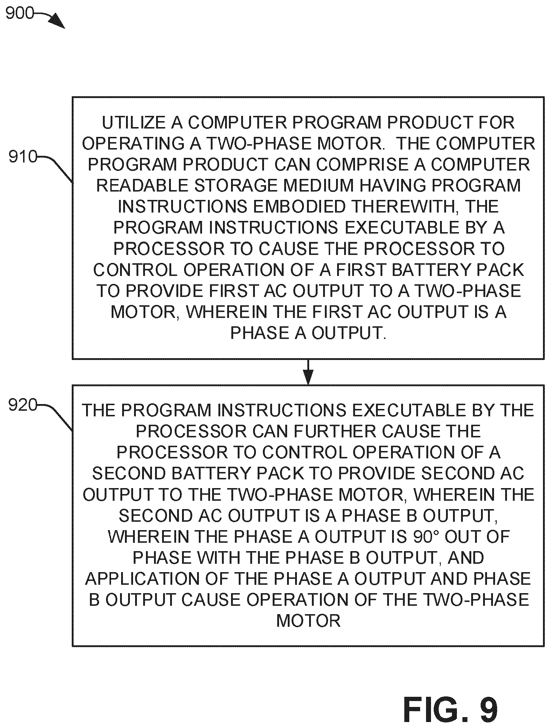

**FIG. 9****,** via flowchart 900, presents an example computer-implemented method for operation of a two-phase machine, in accordance with one or more embodiments presented herein. At 910, method 900 can utilize a computer program product for operating a two-phase motor. The computer program product can comprise a computer readable storage medium (e.g., memory 184) having program instructions embodied therewith, the program instructions executable by a processor (e.g., any of processors 125, 127A-*n*, 145, 147A-*n*, 182) to cause the processor to control operation of a first battery pack (e.g., first battery pack 120) to provide first AC output (e.g., first output 160A) to a two-phase motor (e.g., machine 110), wherein the first AC output is a phase A output. At 920, the program instructions executable by the processor can further cause the processor to control operation of a second battery pack (e.g., second battery pack 140) to provide second AC output (e.g., second output 160B) to the two-phase motor, wherein the second AC output is a phase B output, wherein the phase A output is 90° out of phase with the phase B output, and application of the phase A output and phase B output cause operation of the two-phase motor.

### EXAMPLE APPLICATIONS AND USE

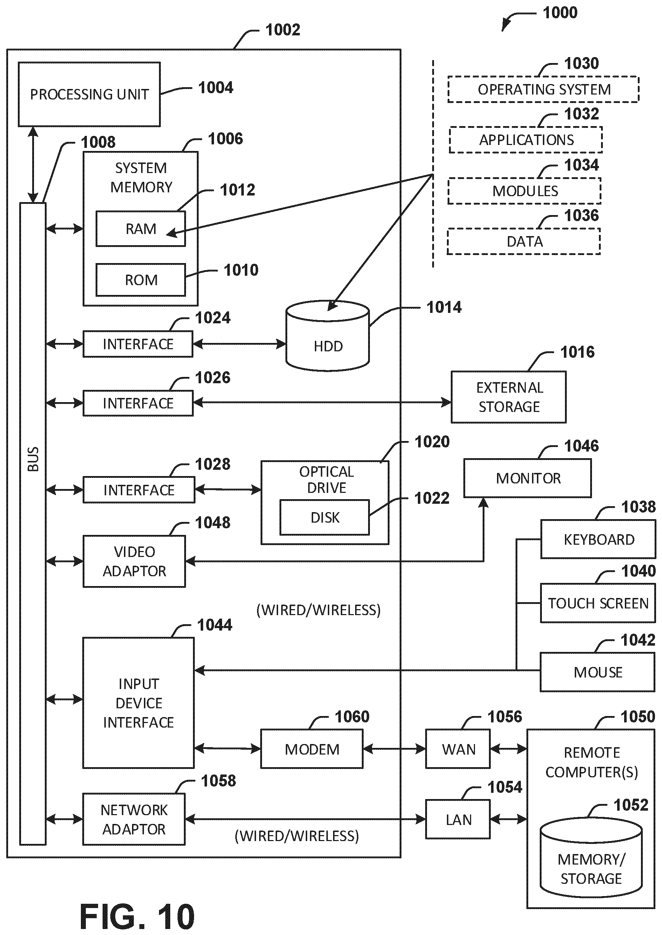

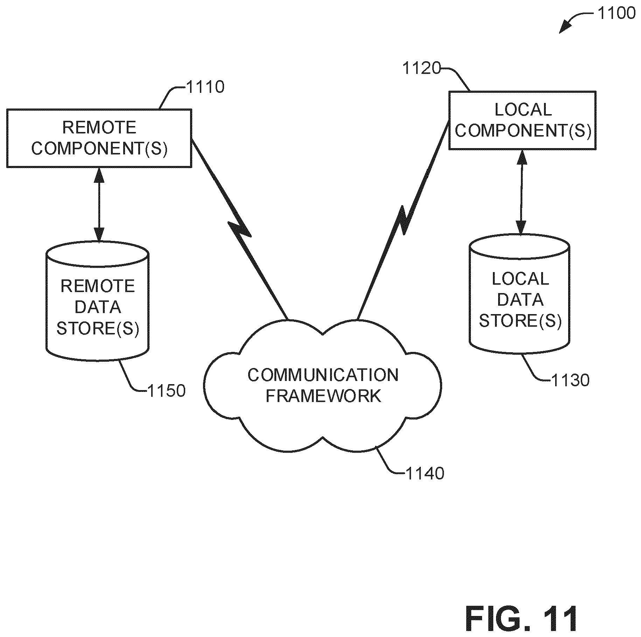

Turning next to FIGS. 10 and 11, a detailed description is provided of additional context for the one or more embodiments described herein with FIGS. 1-9.

In order to provide additional context for various embodiments described herein, **FIG. 10** and the following discussion are intended to provide a brief, general description of a suitable computing environment 1000 in which the various embodiments described herein can be implemented. While the embodiments have been described above in the general context of computer-executable instructions that can run on one or more computers, those skilled in the art will recognize that the embodiments can be also implemented in combination with other program modules and/or as a combination of hardware and software.

Generally, program modules include routines, programs, components, data structures, etc., that perform particular tasks or implement particular abstract data types. Moreover, those skilled in the art will appreciate that the methods can be practiced with other computer system configurations, including single-processor or multiprocessor computer systems, minicomputers, mainframe computers, IoT devices, distributed computing systems, as well as personal computers, hand-held computing devices, microprocessor-based or programmable consumer electronics, and the like, each of which can be operatively coupled to one or more associated devices.

The embodiments illustrated herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 10, the example environment 1000 for implementing various embodiments of the aspects described herein includes a computer 1002, the computer 1002 including a processing unit 1004, a system memory 1006 and a system bus 1008. The system bus 1008 couples system components including, but not limited to, the system memory 1006 to the processing unit 1004. The processing unit 1004 can be any of various commercially available processors and may include a cache memory. Dual microprocessors and other multi-processor architectures can also be employed as the processing unit 1004.

The system bus 1008 can be any of several types of bus structure that can further interconnect to a memory bus (with or without a memory controller), a peripheral bus, and a local bus using any of a variety of commercially available bus architectures. The system memory 1006 includes ROM 1010 and RAM 1012. A basic input/output system (BIOS) can be stored in a non-volatile memory such as ROM, erasable programmable read only memory (EPROM), EEPROM, which BIOS contains the basic routines that help to transfer information between elements within the computer 1002, such as during startup. The RAM 1012 can also include a high-speed RAM such as static RAM for caching data.

The computer 1002 further includes an internal hard disk drive (HDD) 1014 (e.g., EIDE, SATA), one or more external storage devices 1016 (e.g., a magnetic floppy disk drive (FDD) 1016, a memory stick or flash drive reader, a memory card reader, etc.) and an optical disk drive 1020/1022 (e.g., which can read or write from a CD-ROM disc, a DVD, a BD, etc.). While the internal HDD 1014 is illustrated as located within the computer 1002, the internal HDD 1014 can also be configured for external use in a suitable chassis (not shown). Additionally, while not shown in environment 1000, a solid-state drive (SSD) could be used in addition to, or in place of, an HDD 1014. The HDD 1014, external storage device(s) 1016 and optical disk drive 1020 can be connected to the system bus 1008 by an HDD interface 1024, an external storage interface 1026 and an optical drive interface 1028, respectively. The interface 1024 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 1002, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 1012, including an operating system 1030, one or more application programs 1032, other program modules 1034 and program data 1036. All or portions of the operating system, applications, modules, and/or data can also be cached in the RAM 1012. The systems and methods described herein can be implemented utilizing various commercially available operating systems or combinations of operating systems.

Computer 1002 can optionally comprise emulation technologies. For example, a hypervisor (not shown) or other intermediary can emulate a hardware environment for operating system 1030, and the emulated hardware can optionally be different from the hardware illustrated in FIG. 10. In such an embodiment, operating system 1030 can comprise one virtual machine (VM) of multiple VMs hosted at computer 1002. Furthermore, operating system 1030 can provide runtime environments, such as the Java runtime environment or the .NET framework, for applications 1032. Runtime environments are consistent execution environments that allow applications 1032 to run on any operating system that includes the runtime environment. Similarly, operating system 1030 can support containers, and applications 1032 can be in the form of containers, which are lightweight, standalone, executable packages of software that include, e.g., code, runtime, system tools, system libraries and settings for an application.

Further, computer 1002 can comprise a security module, such as a trusted processing module (TPM). For instance with a TPM, boot components hash next in time boot components, and wait for a match of results to secured values, before loading a next boot component. This process can take place at any layer in the code execution stack of computer 1002, e.g., applied at the application execution level or at the operating system (OS) kernel level, thereby enabling security at any level of code execution.

A user can enter commands and information into the computer 1002 through one or more wired/wireless input devices, e.g., a keyboard 1038, a touch screen 1040, and a pointing device, such as a mouse 1042. Other input devices (not shown) can include a microphone, an infrared (IR) remote control, a radio frequency (RF) remote control, or other remote control, a joystick, a virtual reality controller and/or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 1004 through an input device interface 1044 that can be coupled to the system bus 1008, but can be connected by other interfaces, such as a parallel port, an IEEE 1394 serial port, a game port, a USB port, an IR interface, a BLUETOOTH^{®} interface, etc.

A monitor 1046 or other type of display device can be also connected to the system bus 1008 via an interface, such as a video adapter 1048. In addition to the monitor 1046, a computer typically includes other peripheral output devices (not shown), such as speakers, printers, etc.

The computer 1002 can operate in a networked environment using logical connections via wired and/or wireless communications to one or more remote computers, such as a remote computer(s) 1050. The remote computer(s) 1050 can be a workstation, a server computer, a router, a personal computer, portable computer, microprocessor-based entertainment appliance, a peer device or other common network node, and typically includes many or all of the elements described relative to the computer 1002, although, for purposes of brevity, only a memory/storage device 1052 is illustrated. The logical connections depicted include wired/wireless connectivity to a local area network (LAN) 1054 and/or larger networks, e.g., a wide area network (WAN) 1056. Such LAN and WAN networking environments are commonplace in offices and companies, and facilitate enterprise-wide computer networks, such as intranets, all of which can connect to a global communications network, e.g., the internet.

When used in a LAN networking environment, the computer 1002 can be connected to the local network 1054 through a wired and/or wireless communication network interface or adapter 1058. The adapter 1058 can facilitate wired or wireless communication to the LAN 1054, which can also include a wireless access point (AP) disposed thereon for communicating with the adapter 1058 in a wireless mode.

When used in a WAN networking environment, the computer 1002 can include a modem 1060 or can be connected to a communications server on the WAN 1056 via other means for establishing communications over the WAN 1056, such as by way of the internet. The modem 1060, which can be internal or external and a wired or wireless device, can be connected to the system bus 1008 via the input device interface 1044. In a networked environment, program modules depicted relative to the computer 1002 or portions thereof, can be stored in the remote memory/storage device 1052. It will be appreciated that the network connections shown are example and other means of establishing a communications link between the computers can be used.

When used in either a LAN or WAN networking environment, the computer 1002 can access cloud storage systems or other network-based storage systems in addition to, or in place of, external storage devices 1016 as described above. Generally, a connection between the computer 1002 and a cloud storage system can be established over a LAN 1054 or WAN 1056 e.g., by the adapter 1058 or modem 1060, respectively. Upon connecting the computer 1002 to an associated cloud storage system, the external storage interface 1026 can, with the aid of the adapter 1058 and/or modem 1060, manage storage provided by the cloud storage system as it would other types of external storage. For instance, the external storage interface 1026 can be configured to provide access to cloud storage sources as if those sources were physically connected to the computer 1002.

The computer 1002 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

The above description includes non-limiting examples of the various embodiments. It is, of course, not possible to describe every conceivable combination of components or methodologies for purposes of describing the disclosed subject matter, and one skilled in the art may recognize that further combinations and permutations of the various embodiments are possible. The disclosed subject matter is intended to embrace all such alterations, modifications, and variations that fall within the spirit and scope of the appended claims.

Referring now to details of one or more elements illustrated at **FIG. 11****,** an illustrative cloud computing environment 1100 is depicted. FIG. 11 is a schematic block diagram of a computing environment 1100 with which the disclosed subject matter can interact. The system 1100 comprises one or more remote component(s) 1110. The remote component(s) 1110 can be hardware and/or software (e.g., threads, processes, computing devices). In some embodiments, remote component(s) 1110 can be a distributed computer system, connected to a local automatic scaling component and/or programs that use the resources of a distributed computer system, via communication framework 1140. Communication framework 1140 can comprise wired network devices, wireless network devices, mobile devices, wearable devices, radio access network devices, gateway devices, femtocell devices, servers, etc.

The system 1100 also comprises one or more local component(s) 1120. The local component(s) 1120 can be hardware and/or software (e.g., threads, processes, computing devices). In some embodiments, local component(s) 1120 can comprise an automatic scaling component and/or programs that communicate / use the remote resources 1110 and 1120, etc., connected to a remotely located distributed computing system via communication framework 1140.

One possible communication between a remote component(s) 1110 and a local component(s) 1120 can be in the form of a data packet adapted to be transmitted between two or more computer processes. Another possible communication between a remote component(s) 1110 and a local component(s) 1120 can be in the form of circuit-switched data adapted to be transmitted between two or more computer processes in radio time slots. The system 1100 comprises a communication framework 1140 that can be employed to facilitate communications between the remote component(s) 1110 and the local component(s) 1120, and can comprise an air interface, e.g., Uu interface of a UMTS network, via a long-term evolution (LTE) network, etc. Remote component(s) 1110 can be operably connected to one or more remote data store(s) 1150, such as a hard drive, solid state drive, SIM card, device memory, etc., that can be employed to store information on the remote component(s) 1110 side of communication framework 1140. Similarly, local component(s) 1120 can be operably connected to one or more local data store(s) 1130, that can be employed to store information on the local component(s) 1120 side of communication framework 1140.

With regard to the various functions performed by the above described components, devices, circuits, systems, etc., the terms (including a reference to a "means") used to describe such components are intended to also include, unless otherwise indicated, any structure(s) which performs the specified function of the described component (e.g., a functional equivalent), even if not structurally equivalent to the disclosed structure. In addition, while a particular feature of the disclosed subject matter may have been disclosed with respect to only one of several implementations, such feature may be combined with one or more other features of the other implementations as may be desired and advantageous for any given or particular application.

The terms "exemplary" and/or "demonstrative" as used herein are intended to mean serving as an example, instance, or illustration. For the avoidance of doubt, the subject matter disclosed herein is not limited by such examples. In addition, any aspect or design described herein as "exemplary" and/or "demonstrative" is not necessarily to be construed as preferred or advantageous over other aspects or designs, nor is it meant to preclude equivalent structures and techniques known to one skilled in the art. Furthermore, to the extent that the terms "includes," "has," "contains," and other similar words are used in either the detailed description or the claims, such terms are intended to be inclusive - in a manner similar to the term "comprising" as an open transition word - without precluding any additional or other elements.

The term "or" as used herein is intended to mean an inclusive "or" rather than an exclusive "or." For example, the phrase "A or B" is intended to include instances of A, B, and both A and B. Additionally, the articles "a" and "an" as used in this application and the appended claims should generally be construed to mean "one or more" unless either otherwise specified or clear from the context to be directed to a singular form.

The term "set" as employed herein excludes the empty set, i.e., the set with no elements therein. Thus, a "set" in the subject disclosure includes one or more elements or entities. Likewise, the term "group" as utilized herein refers to a collection of one or more entities.

The terms "first," "second," "third," and so forth, as used in the claims, unless otherwise clear by context, is for clarity only and doesn't otherwise indicate or imply any order in time. For instance, "a first determination," "a second determination," and "a third determination," does not indicate or imply that the first determination is to be made before the second determination, or vice versa, etc.

As used in this disclosure, in some embodiments, the terms "component," "system" and the like are intended to refer to, or comprise, a computer-related entity or an entity related to an operational apparatus with one or more specific functionalities, wherein the entity can be either hardware, a combination of hardware and software, software, or software in execution. As an example, a component can be, but is not limited to being, a process running on a processor, a processor, an object, an executable, a thread of execution, computer-executable instructions, a program, and/or a computer. By way of illustration and not limitation, both an application running on a server and the server can be a component.

One or more components can reside within a process and/or thread of execution and a component can be localized on one computer and/or distributed between two or more computers. In addition, these components can execute from various computer readable media having various data structures stored thereon. The components can communicate via local and/or remote processes such as in accordance with a signal having one or more data packets (e.g., data from one component interacting with another component in a local system, distributed system, and/or across a network such as the internet with other systems via the signal). As another example, a component can be an apparatus with specific functionality provided by mechanical parts operated by electric or electronic circuitry, which is operated by a software application or firmware application executed by a processor, wherein the processor can be internal or external to the apparatus and executes at least a part of the software or firmware application. As yet another example, a component can be an apparatus that provides specific functionality through electronic components without mechanical parts, the electronic components can comprise a processor therein to execute software or firmware that confers at least in part the functionality of the electronic components. While various components have been illustrated as separate components, it will be appreciated that multiple components can be implemented as a single component, or a single component can be implemented as multiple components, without departing from example embodiments.

The term "facilitate" as used herein is in the context of a system, device or component "facilitating" one or more actions or operations, in respect of the nature of complex computing environments in which multiple components and/or multiple devices can be involved in some computing operations. Non-limiting examples of actions that may or may not involve multiple components and/or multiple devices comprise transmitting or receiving data, establishing a connection between devices, determining intermediate results toward obtaining a result, etc. In this regard, a computing device or component can facilitate an operation by playing any part in accomplishing the operation. When operations of a component are described herein, it is thus to be understood that where the operations are described as facilitated by the component, the operations can be optionally completed with the cooperation of one or more other computing devices or components, such as, but not limited to, sensors, antennae, audio and/or visual output devices, other devices, etc.

Further, the various embodiments can be implemented as a method, apparatus or article of manufacture using standard programming and/or engineering techniques to produce software, firmware, hardware, or any combination thereof to control a computer to implement the disclosed subject matter. The term "article of manufacture" as used herein is intended to encompass a computer program accessible from any computer-readable (or machine-readable) device or computer-readable (or machine-readable) storage/communications media. For example, computer readable storage media can comprise, but are not limited to, magnetic storage devices (e.g., hard disk, floppy disk, magnetic strips), optical disks (e.g., compact disk (CD), digital versatile disk (DVD)), smart cards, and flash memory devices (e.g., card, stick, key drive). Of course, those skilled in the art will recognize many modifications can be made to this configuration without departing from the scope or spirit of the various embodiments.

Moreover, terms such as "mobile device equipment," "mobile station," "mobile," "subscriber station," "access terminal," "terminal," "handset," "communication device," "mobile device" (and/or terms representing similar terminology) can refer to a wireless device utilized by a subscriber or mobile device of a wireless communication service to receive or convey data, control, voice, video, sound, gaming or substantially any data-stream or signaling-stream. The foregoing terms are utilized interchangeably herein and with reference to the related drawings. Likewise, the terms "access point (AP)," "Base Station (BS)," "BS transceiver," "BS device," "cell site," "cell site device," "gNode B (gNB)," "evolved Node B (eNode B, eNB)," "home Node B (HNB)" and the like, refer to wireless network components or appliances that transmit and/or receive data, control, voice, video, sound, gaming or substantially any data-stream or signaling-stream from one or more subscriber stations. Data and signaling streams can be packetized or frame-based flows.

Furthermore, the terms "device," "communication device," "mobile device," "subscriber," "client entity," "consumer," "client entity," "entity" and the like are employed interchangeably throughout, unless context warrants particular distinctions among the terms. It should be appreciated that such terms can refer to human entities or automated components supported through artificial intelligence (e.g., a capacity to make inference based on complex mathematical formalisms), which can provide simulated vision, sound recognition and so forth.

It should be noted that although various aspects and embodiments are described herein in the context of 5G or other next generation networks, the disclosed aspects are not limited to a 5G implementation, and can be applied in other network next generation implementations, such as sixth generation (6G), or other wireless systems. In this regard, aspects or features of the disclosed embodiments can be exploited in substantially any wireless communication technology. Such wireless communication technologies can include universal mobile telecommunications system (UMTS), global system for mobile communication (GSM), code division multiple access (CDMA), wideband CDMA (WCMDA), CDMA2000, time division multiple access (TDMA), frequency division multiple access (FDMA), multi-carrier CDMA (MC-CDMA), single-carrier CDMA (SC-CDMA), single-carrier FDMA (SC-FDMA), orthogonal frequency division multiplexing (OFDM), discrete Fourier transform spread OFDM (DFT-spread OFDM), filter bank based multi-carrier (FBMC), zero tail DFT-spread-OFDM (ZT DFT-s-OFDM), generalized frequency division multiplexing (GFDM), fixed mobile convergence (FMC), universal fixed mobile convergence (UFMC), unique word OFDM (UW-OFDM), unique word DFT-spread OFDM (UW DFT-Spread-OFDM), cyclic prefix OFDM (CP-OFDM), resource-block-filtered OFDM, wireless fidelity (Wi-Fi), worldwide interoperability for microwave access (WiMAX), wireless local area network (WLAN), general packet radio service (GPRS), enhanced GPRS, third generation partnership project (3GPP), long term evolution (LTE), 5G, third generation partnership project 2 (3GPP2), ultra-mobile broadband (UMB), high speed packet access (HSPA), evolved high speed packet access (HSPA+), high-speed downlink packet access (HSDPA), high-speed uplink packet access (HSUPA), Zigbee, or another institute of electrical and electronics engineers (IEEE) 802.12 technology.

The description of illustrated embodiments of the subject disclosure as provided herein, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as one skilled in the art can recognize. In this regard, while the subject matter has been described herein in connection with various embodiments and corresponding drawings, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below.

While not an exhaustive listing, the following provides an overview of various embodiments, but not all embodiments, presented herein:
Clause 1: A system comprising: a two-phase machine; a first battery pack comprising a first string of battery cell devices, wherein a first cell pole of the first battery pack is connected to a first terminal of a first winding included in the two-phase machine via a first supply line, and a second cell pole of the first battery pack is connected to a second terminal of the first winding via a first return line, wherein the first battery pack includes at least one first processor and at least one first switch configured to generate a first electrical energy supply to the two-phase machine; and a second battery pack comprising a second string of battery cell devices, wherein a first cell pole of the second battery pack is connected to a first terminal of a second winding of the two-phase machine via a second supply line, and a second cell pole of the second battery pack is connected to a second terminal of the second winding via a second return line, wherein the second battery pack includes at least one second processor and at least one second switch configured to generate a second electrical energy supply to the two-phase machine, wherein concurrent application of the first electrical energy supply and the second electrical energy supply combine to cause operation of the two-phase machine
Clause 2: The system of any preceding clause, wherein the respective battery cell devices in the first string of battery cell devices comprise intelligent battery cells having integrated monitoring and switching equipment, and the respective battery cell devices in the second string of battery cell devices comprise intelligent battery cells having integrated monitoring and switching equipment.
Clause 3: The system of any preceding clause, further comprising a third processor communicatively coupled to the first battery pack and the second battery pack, wherein the third processor is configured to operate in conjunction with the at least one first processor and the at least one second processor to facilitate operation of the first battery pack to provide a first electrical output having a first phase and the second battery pack to provide a second electrical output having a second phase, wherein the first phase and the second phase are disparate.
Clause 4: The system of any preceding clause, wherein the first string of battery cell devices are connected in series, in parallel, or a combination of series and parallel to form the first battery pack, and the second string of battery cell devices are connected in series, in parallel, or a combination of series and parallel to form the second battery pack.
Clause 5: The system of any preceding clause, wherein the first electrical energy supply is a first alternating current (AC) phase A supply and the second electrical energy supply is a second AC phase B supply.
Clause 6: The system of any preceding clause, wherein the at least one first processor is configured to operate the at least one first switch and the second first processor is configured to operate the at least one second switch such that the first AC phase A supply is 90° out of phase with the second AC phase B supply.
Clause 7: The system of any preceding clause, wherein the two-phase machine is a two-phase motor, an alternating current (AC) charger, or other electrical device configured for operation with a two-phase AC electrical supply.
Clause 8: The system of any preceding clause, wherein the two-phase machine comprises: a rotor having a set of magnets positioned thereon; and a stator having a winding pattern formed with the first winding and the second winding.
Clause 9: The system of any preceding clause, wherein the winding pattern comprises a repeated pattern comprising a two-phase double layer comprising: a first winding having an upper half winding, a first full winding, a second full winding, and a lower half winding; and a second winding having an upper half winding, a first full winding, a second full winding, and a lower half winding.
Clause 10: The system of any preceding clause, wherein the upper half winding of the first winding is adjacent to the lower half winding of the second winding and the lower half winding of the first winding is adjacent to the upper half winding of the second winding.
Clause 11: A computer-implemented method comprising: controlling, by a device comprising at least one processor, operation of a first battery pack to provide first AC output to a two-phase machine, wherein the first AC output is a phase A output; and controlling, by the device, operation of a second battery pack to provide second AC output to the two-phase machine, wherein the second AC output is a phase B output, and application of the phase A output and phase B output cause operation of the two-phase machine.
Clause 12: The computer-implemented method of any preceding clause, wherein the device is configured to control operation of the first battery pack and the second battery pack such that the phase A output is 90° out of phase with the phase B output.
Clause 13: The computer-implemented method of any preceding clause, wherein the first battery pack comprises a first string of battery cell devices, wherein each respective battery cell device in the first string of battery cell devices comprises a switch, wherein the device is further configured to control operation of the respective switch to facilitate the phase A output from the first battery pack; and wherein the second battery pack comprises a second string of battery cell devices, wherein each respective battery cell device in the second string of battery cell devices comprises a switch, wherein the device is further configured to control operation of the respective switch to facilitate the phase B output from the second battery pack.
Clause 14: The computer-implemented method of any preceding clause, wherein the two-phase machine is a two-phase motor comprising: a rotor comprising a sequence of magnets located on the rotor; and a stator comprising a two-phase winding configuration.
Clause 15: The computer-implemented method of any preceding clause, wherein the two-phase winding configuration comprises a repeated pattern comprising a two-phase double layer comprising: a first winding having an upper half winding, a first full winding, a second full winding, and a lower half winding; and a second winding having an upper half winding, a first full winding, a second full winding, and a lower half winding, wherein the upper half winding of the first winding is adjacent to the lower half winding of the second winding and the lower half winding of the first winding is adjacent to the upper half winding of the second winding.
Clause 16: A computer program product for operating a two-phase motor, the computer program product comprising a computer readable storage medium having program instructions embodied therewith, the program instructions executable by a processor to cause the processor to: control operation of a first battery pack to provide first AC output to a two-phase motor, wherein the first AC output is a phase A output; and control operation of a second battery pack to provide second AC output to the two-phase motor, wherein the second AC output is a phase B output, wherein the phase A output is 90° out of phase with the phase B output, and application of the phase A output and phase B output cause operation of the two-phase motor.
Clause 17: The computer program product of any preceding clause, wherein the first battery pack comprises a first string of battery cell devices, wherein the first string of battery cell devices comprises: a first battery cell device in the first battery pack configured with a first switch, wherein operation of the first switch controls AC output of the first battery cell device, an *n*^{th} battery cell device in the first battery pack configured with an *n*^{th} switch, wherein operation of the *n*^{th} switch controls AC output of the *n*^{th} battery cell device, wherein the program instructions are further executable by the processor to cause the processor to control operation of the first switch in the first battery cell device and the *n*^{th} switch in the first battery cell device to facilitate the phase A output from the first battery pack; and wherein the second battery pack comprises a second string of battery cell devices, wherein the second string of battery cell devices comprises: a first battery cell device in the second battery pack configured with a first switch, wherein operation of the first switch controls AC output of the first battery cell device, an *n*^{th} battery cell device in the second battery pack configured with an *n*^{th} switch, wherein operation of the *n*^{th} switch controls AC output of the *n*^{th} battery cell device, wherein the program instructions are further executable by the processor to cause the processor to control operation of the first switch in the second battery pack and the *n*^{th} switch in the second battery pack to facilitate the phase B output from the second battery pack.
Clause 18: The computer program product of any preceding clause, wherein the two-phase motor, the first battery pack, and the second battery pack are electrically coupled together and located on a vehicle, wherein the two-phase motor is coupled to a propulsion system configured to propel the vehicle.
Clause 19: The computer program product of any preceding clause, wherein a first terminal of the first battery pack is connected, via a first supply line, to a first supply terminal of the two-phase motor, and a second terminal of the first battery pack is connected, via a first neutral line, to a first neutral terminal of the two-phase motor; and wherein a first terminal of the second battery pack is connected, via a second supply line, to a second supply terminal of the two-phase motor, and a second terminal of the second battery pack is connected, via a second neutral line, to a second neutral terminal of the two-phase motor.
Clause 20: The computer program product of any preceding clause, a rotor comprising a sequence of magnets located on the rotor; and a stator comprising a two-phase winding configuration, wherein the two-phase winding configuration comprises a repeated pattern comprising a two-phase double layer comprising: a first winding having an upper half winding, a first full winding, a second full winding, and a lower half winding; and a second winding having an upper half winding, a first full winding, a second full winding, and a lower half winding, wherein the upper half winding of the first winding is adjacent to the lower half winding of the second winding and the lower half winding of the first winding is adjacent to the upper half winding of the second winding.

In various cases, any suitable combination of clauses 1-10 can be implemented.

In various cases, any suitable combination of clauses 11-15 can be implemented.

In various cases, any suitable combination of clauses 16-20 can be implemented.

## Claims

1. A system comprising:
a two-phase machine;
a first battery pack comprising a first string of battery cell devices, wherein a first cell pole of the first battery pack is connected to a first terminal of a first winding included in the two-phase machine via a first supply line, and a second cell pole of the first battery pack is connected to a second terminal of the first winding via a first return line, wherein the first battery pack includes at least one first processor and at least one first switch configured to generate a first electrical energy supply to the two-phase machine; and
a second battery pack comprising a second string of battery cell devices, wherein a first cell pole of the second battery pack is connected to a first terminal of a second winding of the two-phase machine via a second supply line, and a second cell pole of the second battery pack is connected to a second terminal of the second winding via a second return line, wherein the second battery pack includes at least one second processor and at least one second switch configured to generate a second electrical energy supply to the two-phase machine, wherein concurrent application of the first electrical energy supply and the second electrical energy supply combine to cause operation of the two-phase machine.

2. The system of claim 1, wherein the respective battery cell devices in the first string of battery cell devices comprise intelligent battery cells having integrated monitoring and switching equipment, and the respective battery cell devices in the second string of battery cell devices comprise intelligent battery cells having integrated monitoring and switching equipment.

3. The system of claim 1, further comprising:
a third processor communicatively coupled to the first battery pack and the second battery pack, wherein the third processor is configured to operate in conjunction with the at least one first processor and the at least one second processor to facilitate operation of the first battery pack to provide a first electrical output having a first phase and the second battery pack to provide a second electrical output having a second phase, wherein the first phase and the second phase are disparate.

4. The system of claim 1, wherein the first string of battery cell devices are connected in series, in parallel, or a combination of series and parallel to form the first battery pack, and the second string of battery cell devices are connected in series, in parallel, or a combination of series and parallel to form the second battery pack.

5. The system of claim 1, wherein the first electrical energy supply is a first alternating current (AC) phase A supply and the second electrical energy supply is a second AC phase B supply.

6. The system of claim 1, wherein the at least one first processor is configured to operate the at least one first switch and the second first processor is configured to operate the at least one second switch such that the first AC phase A supply is 90° out of phase with the second AC phase B supply.

7. The system of claim 1, wherein the two-phase machine is a two-phase motor, an alternating current (AC) charger, or other electrical device configured for operation with a two-phase AC electrical supply.

8. The system of claim 1, wherein the two-phase machine comprises:
a rotor having a set of magnets positioned thereon; and
a stator having a winding pattern formed with the first winding and the second winding, wherein the winding pattern comprises a repeated pattern comprising a two-phase double layer comprising:
a first winding having an upper half winding, a first full winding, a second full winding, and a lower half winding; and
a second winding having an upper half winding, a first full winding, a second full winding, and a lower half winding, and wherein the upper half winding of the first winding is adjacent to the lower half winding of the second winding and the lower half winding of the first winding is adjacent to the upper half winding of the second winding.

9. A computer-implemented method comprising:
controlling, by a device comprising at least one processor, operation of a first battery pack to provide first AC output to a two-phase machine, wherein the first AC output is a phase A output; and
controlling, by the device, operation of a second battery pack to provide second AC output to the two-phase machine, wherein the second AC output is a phase B output, and application of the phase A output and phase B output cause operation of the two-phase machine.

10. The computer-implemented method of claim 9, wherein the device is configured to control operation of the first battery pack and the second battery pack such that the phase A output is 90° out of phase with the phase B output.

11. The computer implemented method of claim 9, wherein the first battery pack comprises a first string of battery cell devices, wherein each respective battery cell device in the first string of battery cell devices comprises a switch, wherein the device is further configured to control operation of the respective switch to facilitate the phase A output from the first battery pack; and
wherein the second battery pack comprises a second string of battery cell devices, wherein each respective battery cell device in the second string of battery cell devices comprises a switch, wherein the device is further configured to control operation of the respective switch to facilitate the phase B output from the second battery pack.

12. The computer-implemented method of claim 10, wherein the two-phase machine is a two-phase motor comprising:
a rotor comprising a sequence of magnets located on the rotor; and
a stator comprising a two-phase winding configuration.

13. A computer program product for operating a two-phase motor, the computer program product comprising a computer readable storage medium having program instructions embodied therewith, the program instructions executable by a processor to cause the processor to:
control operation of a first battery pack to provide first AC output to a two-phase motor, wherein the first AC output is a phase A output; and
control operation of a second battery pack to provide second AC output to the two-phase motor, wherein the second AC output is a phase B output, wherein the phase A output is 90° out of phase with the phase B output, and application of the phase A output and phase B output cause operation of the two-phase motor.

14. The computer program product of claim 13, wherein the first battery pack comprises a first string of battery cell devices, wherein the first string of battery cell devices comprises:
a first battery cell device in the first battery pack configured with a first switch, wherein operation of the first switch controls AC output of the first battery cell device,
an *n*^{th} battery cell device in the first battery pack configured with an *n*^{th} switch, wherein operation of the *n*^{th} switch controls AC output of the *n*^{th} battery cell device,
wherein the program instructions are further executable by the processor to cause the processor to control operation of the first switch in the first battery cell device and the *n*^{th} switch in the first battery cell device to facilitate the phase A output from the first battery pack; and
wherein the second battery pack comprises a second string of battery cell devices, wherein the second string of battery cell devices comprises:
a first battery cell device in the second battery pack configured with a first switch, wherein operation of the first switch controls AC output of the first battery cell device,
an *n*^{th} battery cell device in the second battery pack configured with an *n*^{th} switch, wherein operation of the *n*^{th} switch controls AC output of the *n*^{th} battery cell device,
wherein the program instructions are further executable by the processor to cause the processor to control operation of the first switch in the second battery pack and the *n*^{th} switch in the second battery pack to facilitate the phase B output from the second battery pack.

15. The computer program product of claim 13, wherein the two-phase motor, the first battery pack, and the second battery pack are electrically coupled together and located on a vehicle, wherein the two-phase motor is coupled to a propulsion system configured to propel the vehicle.
